# FASCICULE DE BREVET EUROPEEN

(11) **EP 3 085 648 B1**
(45) Date de publication et mention de la délivrance du brevet: **13.02.2019**
(21) Numéro de dépôt: 16166098.0
(22) Date de dépôt: 19.04.2016
(51) Int. Cl.: B65G 69/00, B65G 69/28

(54) **DISPOSITIF DE BUTOIR ESCAMOTABLE POUR INSTALLATION DE QUAI DE CHARGEMENT, INSTALLATION DE QUAI LE COMPRENANT ET PROCEDE D'UTILISATION CORRESPONDANT**
VERSENKBARE ANSCHLAGVORRICHTUNG FÜR EINE LADERAMPENANLAGE, DIESE UMFASSENDE RAMPENANLAGE UND ENTSPRECHENDES EINSATZVERFAHREN
RETRACTABLE STOPPER DEVICE FOR A LOADING DOCK FACILITY, DOCK FACILITY INCLUDING SAME, AND CORRESPONDING METHOD FOR USE

(30) Priorité: 20.04.2015 FR 1553537
(43) Date de publication de la demande: 26.10.2016
(73) Titulaire: GPsystems, 82790 Saint-Sornin-Leulac (FR)
(72) Inventeur: Verge, Jean-Paul, 87290 Saint -Sornin-Leulac (FR); Macquet, Pierre, 87290 Saint-Sornin-Leulac (FR)
(74) Mandataire: Cabinet Chaillot

(56) Documents cités:
- EP-A1- 1 081 071
- EP-A1- 1 462 400
- EP-A1- 2 832 670
- WO-A1-01/81215
- DE-A1- 19 525 308
- DE-U1-202008 005 167
- US-A- 5 071 306
- US-A- 5 831 540
- US-A1- 2002 162 179

## Description

La présente invention concerne le domaine des équipements de sécurité pour installation de quai de chargement/déchargement, et porte en particulier sur un dispositif de butoir escamotable, sur une installation de quai comprenant de tels dispositifs de butoir et sur un procédé d'utilisation d'une telle installation de quai.

Il est connu d'équiper un quai de chargement de butoirs. De tels butoirs sont destinés à amortir, pour protéger le véhicule, les chocs générés par l'arrière du véhicule lorsque celui-ci accoste le quai en reculant en direction de ce dernier.

On connaît des demandes de brevets européens EP 1 182 155 A2 et EP 2 832 670 A1 un dispositif de butoir escamotable qui comprend un châssis fixe et un butoir mobile. Le châssis fixe est monté sur la face avant du quai et le butoir mobile est déplaçable en translation entre une position escamotée dans le quai et une position déployée vers le haut et vers l'avant du quai. Le butoir est placé dans sa position déployée en l'absence de véhicule, pour servir de butée lors de l'accostage d'un véhicule. Une fois le véhicule immobilisé, il est alors rétracté de manière à ne pas gêner l'ouverture des portes du véhicule, voire le bon positionnement d'un niveleur de quai.

Le déplacement du butoir vers la position escamotée ou la position déployée peut être manuel ou être obtenu par un actionneur tel qu'un vérin ou un moteur, avec éventuellement des moyens de transformation du mouvement de sortie de l'actionneur en un mouvement de translation du butoir.

Dans tous les cas de figure, le déplacement du butoir entre les positions escamotée et déployée résulte d'une commande spécifique d'un opérateur après qu'il a constaté visuellement que le véhicule est parti, auquel cas l'opérateur déploie le butoir, ou que le véhicule a accosté, auquel cas l'opérateur escamote le butoir pour permettre l'ouverture des portes arrière du véhicule.

Cette commande spécifique par l'opérateur est source de problèmes de sécurité, puisque l'opérateur peut oublier de déployer le butoir après le départ d'un véhicule de sorte que le butoir n'est pas en place pour l'arrivée du véhicule suivant, et de potentielles pertes de temps, puisque l'opérateur peut avoir oublier d'escamoter le butoir après l'accostage d'un véhicule et ne s'en rendre compte que lorsque le conducteur du véhicule l'informe de l'impossibilité d'ouvrir les portes arrière du véhicule.

La présente invention vise à surmonter ces inconvénients en proposant un dispositif de butoir escamotable dont le déplacement est automatique et asservi à l'ouverture/fermeture d'une porte de quai, et éventuellement à la présence/absence d'un véhicule dans l'emplacement de chargement/déchargement.

La demande internationale PCT WO 01/81215 A1 divulgue un dispostif de butoir escamotable selon le préambule de la revendication 1.

Sont également connus des dispositifs de butoir escamotables automatisé dont la commande de l'actionnement est asservie à la présence/absence d'un véhicule (demande EP 1 462 400 A1) ou à l'état de fonctionnement du niveleur de quai (modèle d'utilité DE 20 2008 005167 U1 et demande DE 195 25 308 A1).

La présente invention a pour objet un dispositif de butoir escamotable tel que défini à la revendication 1, pour une installation de quai de chargement/déchargement de véhicule, ladite installation de quai comprenant un quai, un niveleur de quai inclinable et de préférence à lèvre télescopique, un système d'immobilisation de véhicule configuré pour, dans une position d'immobilisation, immobiliser le véhicule dans un emplacement de chargement/déchargement et, dans une position de non-utilisation, laisser libre le véhicule, et une porte de quai permettant de faire communiquer le quai avec un entrepôt, le dispositif de butoir escamotable comprenant :
- un châssis apte à (ou, autrement dit, configuré pour) être fixé dans le quai, sur un côté du niveleur de quai et en regard de l'emplacement de chargement/déchargement devant le quai ;
- un butoir mobile présentant des moyens de butée et relié au châssis de façon à être déplaçable par rapport au châssis entre une position escamotée, dans laquelle le butoir est reçu dans le châssis de telle sorte qu'en utilisation le butoir ne dépasse pas au-dessus de la surface supérieure du quai afin de ne pas gêner l'ouverture des portes d'un véhicule stationné dans l'emplacement de chargement/déchargement, et une position déployée, dans laquelle le butoir fait saillie du châssis de telle sorte qu'en utilisation les moyens de butée du butoir font saillie en avant et au-dessus du quai de façon à constituer une butée pour l'arrière d'un véhicule accostant le quai ;
- des moyens de déplacement du butoir entre les positions escamotée et déployée ; et
- des moyens de commande desdits moyens de déplacement, le dispositif de butoir escamotable comprenant en outre des moyens de détermination de condition de sécurité configurés pour déterminer si au moins une condition de sécurité, comprenant l'état d'ouverture/de fermeture de la porte de quai, est satisfaite, et que les moyens de détermination de condition de sécurité sont couplés auxdits moyens de commande pour que ces derniers, par l'intermédiaire desdits moyens de déplacement, placent le butoir dans la position déployée quand la porte de quai est fermée, le dispositif de butoir escamotable permettant ainsi de simplifier l'utilisation de l'installation de quai par les opérateurs tout en améliorant la sécurité de ces derniers. Le dispositif de butoir escamotable de la présente invention est tout d'abord caractérisé par le fait que les moyens de commande placent le butoir dans la position escamotée quand la porte de quai est ouverte.

Comme autre condition de sécurité, on peut mentionner la présence/l'absence d'un véhicule stationné dans l'emplacement de chargement/déchargement, auquel cas le butoir sera placé dans la position déployée par exemple en l'absence d'un véhicule stationné dans l'emplacement de chargement/déchargement, et dans la position escamotée en présence d'un véhicule stationné dans l'emplacement de chargement/déchargement. Dans la présente, on entend par l'expression « véhicule stationné » ou « véhicule en stationnement » que le véhicule est à l'arrêt pour une opération de chargement ou de déchargement.

On souligne ici que la condition d'absence est relative à un véhicule stationné. Ainsi, selon la présente invention, on considèrera que la condition d'absence est satisfaite non seulement dans le cas où aucun véhicule n'est présent dans l'emplacement de chargement/déchargement, mais encore dans le cas de l'arrivée d'un véhicule dans ledit emplacement, avant que le véhicule ne soit stationné. Par conséquent, on peut tout à fait prévoir que le butoir reste escamoté jusqu'à ce que lesdits moyens de détermination déterminent qu'un véhicule vient d'entrer dans l'emplacement de chargement/déchargement, ce sur quoi le butoir est déployé.

Lesdits moyens de détermination de condition de sécurité peuvent être configurés pour déterminer à la fois l'état d'ouverture/de fermeture de la porte de quai et la présence/l'absence d'un véhicule stationné dans l'emplacement de chargement/déchargement.

Lesdits moyens de détermination peuvent être des moyens de détection configurés pour détecter l'état d'ouverture/de fermeture de la porte, et éventuellement la présence/l'absence d'un véhicule dans l'emplacement de chargement/déchargement, lesquels moyens de détection sont, de préférence, choisis dans le groupe constitué par les capteurs à ultrasons, les capteurs optiques et les capteurs à contact.

Lesdits moyens de détermination de condition de sécurité peuvent être configurés pour également déterminer si le système d'immobilisation de véhicule est dans la position d'immobilisation ou dans la position de non-utilisation et sont également couplés auxdits moyens de commande pour que ces derniers, par l'intermédiaire desdits moyens de déplacement, placent le butoir dans la position escamotée quand le système d'immobilisation de véhicule est dans la position d'immobilisation et dans la position déployée quand le système d'immobilisation de véhicule est dans la position de non-utilisation.

On souligne ici que la détermination des conditions de sécurité conduite par lesdits moyens de détermination peut être une détermination directe ou une détermination indirecte.

On entend par l'expression « détermination directe » que les moyens de détermination n'utilisent aucune condition intermédiaire entre eux-mêmes et les conditions de sécurité sur lesquelles ils travaillent. Un exemple d'une telle détermination directe est la détection optique de l'état d'ouverture/de fermeture de la porte.

Au contraire, on entend par l'expression « détermination indirecte » que les moyens de détermination utilisent une ou plusieurs conditions intermédiaires pour déterminer les conditions de sécurité.

Par exemple, le fonctionnement du niveleur de quai pourrait être asservi à l'état d'ouverture/de fermeture de la porte (déploiement du niveleur après ouverture de la porte, escamotage du niveleur après fermeture) et les moyens de détermination pourraient déterminer l'état de fonctionnement du niveleur pour en déduire l'état d'ouverture/de fermeture de la porte.

De manière analogue, le fonctionnement du système d'immobilisation de véhicule pourrait être asservi à la présence/absence d'un véhicule, détectée par des moyens de détection (déploiement après stationnement d'un véhicule, escamotage avant départ du véhicule), et les moyens de détermination pourraient déterminer l'état de fonctionnement du système d'immobilisation pour en déduire la présence/absence d'un véhicule en stationnement (système déployé = présence d'un véhicule en stationnement / système escamoté = absence d'un véhicule en stationnement).

La demande EP 1 462 400 A1 divulgue également un dispositif de butoir escamotable comprenant un châssis fixé dans un logement de réception de butoir, un butoir comprenant une première extrémité qui présente des moyens de butée et une seconde extrémité venant en appui sur une surface du châssis lorsque le butoir est dans la position déployée, la surface d'arrêt étant orientée pour s'opposer au déplacement du butoir sous l'action d'un véhicule appuyant sur les moyens de butée, et des moyens de déplacement du butoir reliés à celui-ci par une liaison autorisant un déplacement relatif dans la direction de déplacement du butoir sous l'action d'un véhicule appuyant sur les moyens de butée.

Le dispositif de butoir escamotable de la présente invention est en outre caractérisé par le fait que le dispositif de butoir escamotable est pour une installation de quai dont le quai comprend un logement de réception de butoir débouchant à la fois sur une paroi verticale et sur une paroi horizontale du quai, et par le fait que :
- le châssis est apte à (configuré pour) être fixé dans un logement de réception de butoir respectif ;
- le butoir comprend une première extrémité qui présente les moyens de butée et une seconde extrémité qui présente une surface, dite d'appui, venant en appui sur ou au voisinage immédiat d'une surface, dite d'arrêt, du châssis lorsque le butoir est dans la position déployée, la surface d'arrêt étant orientée pour s'opposer au déplacement du butoir sous l'action d'un véhicule appuyant sur les moyens de butée ; et
- les moyens de déplacement sont reliés au butoir et/ou châssis par une liaison autorisant un déplacement relatif, entre les moyens de déplacement et le butoir et/ou le châssis, dans la direction de déplacement du butoir sous l'action d'un véhicule appuyant sur les moyens de butée,
ce par quoi l'effort exercé par un véhicule heurtant les moyens de butée du butoir est transmis par le butoir au châssis, puis au quai, sans être repris ni par les moyens de déplacement, ni par la liaison entre les moyens de déplacement et le butoir et/ou le châssis, le butoir étant relié au châssis respectif de façon à être apte à pivoter par rapport à ce dernier, les moyens de déplacement étant configurés pour faire pivoter le butoir entre les positions escamotée et déployée.

Cette configuration permet d'empêcher une dégradation du butoir due aux chocs répétés avec les véhicules, puisque ces chocs sont repris par le quai.

En effet, dans les dispositifs de butoir escamotables de l'état antérieur de la technique décrits ci-dessus, le butoir est relié aux moyens de déplacement d'une manière telle que les efforts appliqués au butoir par les véhicules sont transmis aux moyens de déplacement et à la liaison entre ces derniers et le butoir, lesquels ne sont ni conçus ni dimensionnés pour pouvoir reprendre ces efforts. Ces chocs, qui peuvent être très forts, conduisent donc à une dégradation du butoir pouvant aller jusqu'à sa rupture, le butoir ne pouvant alors plus jouer son rôle de dispositif de sécurité.

La surface d'arrêt peut être inclinée selon un angle compris entre 0° et 45° par rapport à la verticale.

La surface d'arrêt peut comprendre une première partie de surface et une seconde partie de surface formant un angle entre elles, la première partie de surface étant inclinée selon un angle compris entre 0° et 45° par rapport à l'horizontale et la seconde partie de surface étant inclinée selon un angle compris entre 0° et 45° par rapport à la verticale.

Les moyens de déplacement peuvent comprendre un vérin double effet dont le corps de vérin est reliée de façon pivotante à l'un parmi le châssis et le butoir et dont la tige de vérin est reliée de façon pivotante à l'autre du châssis et du butoir, de telle sorte qu'une extension et une rétraction de la tige de vérin déplace le butoir respectivement de la position escamotée à la position déployée et inversement.

Selon un premier mode de réalisation particulier de la présente invention, le butoir est formé par un ensemble poutre dont une extrémité présente les moyens de butée et dont l'autre extrémité présente la surface d'appui, la surface d'arrêt du châssis étant perpendiculaire à la direction longitudinale de l'ensemble poutre de façon à constituer un arrêt en translation pour l'ensemble poutre.

Le châssis peut comprendre une surface de support horizontale sur laquelle repose la région d'extrémité de l'ensemble poutre présentant la surface d'appui, la surface d'arrêt s'étendant vers le haut à partir de la surface de support et étant inclinée en étant tournée vers le haut, l'arête horizontale inférieure de l'ensemble poutre qui repose sur la surface de support étant en contact avec ladite surface d'arrêt, de telle sorte que ladite arête inférieure forme l'axe de pivotement de l'ensemble poutre.

Le dispositif de butoir escamotable peut comprendre des moyens de guidage du pivotement de l'ensemble poutre, de préférence formés par au moins un trou oblong ménagé dans une plaque de guidage solidaire du châssis et par un axe de guidage relié à rotation à l'ensemble poutre et s'étendant dans ledit ou lesdits trous oblongs de façon à être apte à y coulisser.

On pourra avantageusement prévoir deux plaques de guidage en regard l'une de l'autre, chacune comportant un trou oblong incliné de l'arrière vers l'avant du châssis, en partant du bas vers le haut des trous oblongs, l'axe de guidage s'étendant à travers les deux trous oblongs et étant relié à rotation dans la région de l'extrémité de l'ensemble poutre qui présente les moyens de butée, et les moyens de déplacement sont formés par un vérin double effet dont l'un du corps et de la tige est relié à pivotement audit axe de guidage et l'autre du corps et de la tige est relié à pivotement à l'ensemble poutre au niveau d'une région médiane de celle-ci et à une hauteur supérieure à celle de l'axe de guidage.

Selon un second mode de réalisation particulier de la présente invention :
- le butoir est formé par une pièce inscrite dans un parallélépipède rectangle et présentant une première face formant lesdits moyens de butée et une seconde face, opposée à la première face, à partir de laquelle s'étend une paire de bras d'appui généralement rectilignes en regard l'un de l'autre et une paire de bras coudés vers le bas, également en regard l'un de l'autre, l'extrémité libre de chaque bras d'appui présentant la surface d'appui ;
- le châssis est défini latéralement par deux plaques de guidage dans chacune desquelles sont ménagés un trou oblong généralement horizontal et une rainure suivant un arc de cercle centré sur l'extrémité côté avant dudit trou oblong, puis s'achevant en une partie rectiligne généralement horizontale, le trou oblong étant prévu dans la région du coin supérieur avant de la plaque de guidage ;
- un premier axe de guidage s'étend entre les deux bras coudés et également à travers les trous oblongs des plaques de guidage ;
- un second axe de guidage s'étend entre les deux bras d'appui, dans la région d'extrémité libre de ceux-ci, et dans les rainures des plaques de guidage ; et
- les moyens de déplacement du butoir sont configurés pour déplacer le butoir en faisant coulisser le second axe de guidage le long des rainures arquées, le premier axe de guidage définissant l'axe de pivotement du butoir.

Est avantageusement prévue au moins une biellette dont une extrémité est reliée au second axe de guidage de façon à être apte à pivoter autour de ce dernier et dont l'autre extrémité est relié à l'un du corps et de la tige du vérin de façon à être à pivoter par rapport à ce dernier autour d'un axe de pivotement parallèle au second axe de guidage, le vérin étant positionné pour que sa tige soit globalement verticale lorsque le butoir est dans la position escamotée et soit inclinée vers l'arrière du châssis lorsque le butoir est dans la position déployée.

Les moyens de butée du butoir peuvent par exemple être formés par la surface d'une pièce, telle que de l'ensemble poutre ou de la pièce parallélépipédique, ou être formés par un ou plusieurs rouleaux, chacun monté librement rotatif autour d'un axe horizontal perpendiculaire à la direction de l'effort exercé par un véhicule venant en appui contre les moyens de butée. Dans le cas d'un ensemble poutre, cet axe sera perpendiculaire à la direction longitudinale de l'ensemble poutre.

De préférence, les moyens de butée du butoir forment un plan théorique de butée contre lequel vient en contact l'arrière d'un véhicule accostant le quai, ledit plan théorique de butée étant, dans la position déployée, incliné en étant tourné vers le haut. Une telle inclinaison permet de faciliter le dégagement du butoir lors de son escamotage après contact avec un véhicule.

La présente invention a également pour objet une installation de quai de chargement/déchargement de véhicule, comprenant un quai, un niveleur de quai inclinable et, de préférence, à lèvre télescopique, deux dispositifs de butoir escamotable installés de part et d'autre du niveleur de quai, un système d'immobilisation de véhicule configuré pour, dans une position d'immobilisation, immobiliser le véhicule dans un emplacement de chargement/déchargement et, dans une position de non-utilisation, laisser libre le véhicule, et une porte de quai permettant de faire communiquer le quai avec un entrepôt, l'installation de quai étant caractérisée par le fait que les dispositifs de butoir escamotable sont tels que définis dans la revendication 1.

Selon un mode de réalisation préféré, le niveleur de quai inclinable et, de préférence, à lèvre télescopique, est muni de moyens de commande couplés auxdits moyens de détermination de condition de sécurité pour que lesdits moyens de commande déploient et escamotent automatiquement le niveleur de quai après que les butoirs sont, respectivement, escamotés et déployés.

De préférence, le système d'immobilisation de véhicule est muni de moyens de commande couplés auxdits moyens de détermination de condition de sécurité pour que lesdits moyens de commande placent automatiquement le système d'immobilisation de véhicule dans la position d'immobilisation lorsque les butoirs sont escamotés et placent automatiquement le système d'immobilisation de véhicule dans la position de non-utilisation lorsque les butoirs sont déployés.

La présente invention a également pour objet un procédé d'utilisation de l'installation de quai telle que définie dans la revendication 13, pour une opération de chargement/déchargement, caractérisée par le fait qu'il comprend les étapes suivantes :
- en l'absence d'un véhicule stationné dans l'emplacement de chargement/déchargement et avec la porte fermée, automatiquement placer les butoirs dans la position déployée, le système d'immobilisation de véhicule dans la position de non-utilisation et le niveleur de quai dans la position escamotée ;
- lors de l'ouverture de la porte et/ou lors de la détermination qu'un véhicule est stationné dans l'emplacement de chargement/déchargement, automatiquement placer les butoirs dans la position escamotée, le système d'immobilisation de véhicule dans la position d'immobilisation et le niveleur de quai dans une position dite déployée basse dans laquelle le niveleur de quai vient affleurer contre l'arrière du véhicule, dans le but d'en ouvrir les portes arrière ;
- après ouverture des portes arrière du véhicule, placer, facultativement automatiquement, le niveleur de quai dans une position dite déployée haute, dans laquelle le niveleur de quai, notamment sa lèvre, s'étend dans le véhicule pour en effectuer le chargement/déchargement ;
- après que le chargement/déchargement est effectué, placer, facultativement automatiquement, le niveleur de quai dans la position déployée basse, pour fermeture des portes arrière du véhicule par l'opérateur ; et
- après fermeture des portes arrière, fermer la porte et ainsi automatiquement placer les butoirs dans la position déployée, le système d'immobilisation de véhicule dans la position de non-utilisation et le niveleur de quai dans la position escamotée.

Pour mieux illustrer l'objet de la présente invention, on va en décrire ci-après un mode de réalisation particulier avec référence aux dessins annexés.

Sur ces dessins :
- la Figure 1 est une vue en perspective d'une partie d'une installation de quai équipé d'un dispositif de butoir escamotable selon un premier mode de réalisation de la présente invention ;
- les Figures 2 à 15 représentent la succession d'étapes de fonctionnement d'une installation de quai de chargement/déchargement équipé de dispositifs de butoir escamotable selon la présente invention.
- la Figure 16a est une vue en perspective du dispositif de butoir escamotable, en position déployée ;
- la Figure 16b est un vue agrandie au niveau de la zone de contact butoir/châssis, en position déployée ;
- les Figures 17a et 17b sont des vues analogues aux Figures 16a et 16b, respectivement, en position escamotée ;
- la Figure 18 est une vue en perspective du dispositif de butoir escamotable selon un second mode de réalisation de la présente invention ; et
- les Figures 19 à 22 sont des vues en coupe longitudinale du dispositif de butoir escamotable de la Figure 18, à différentes étapes de fonctionnement.

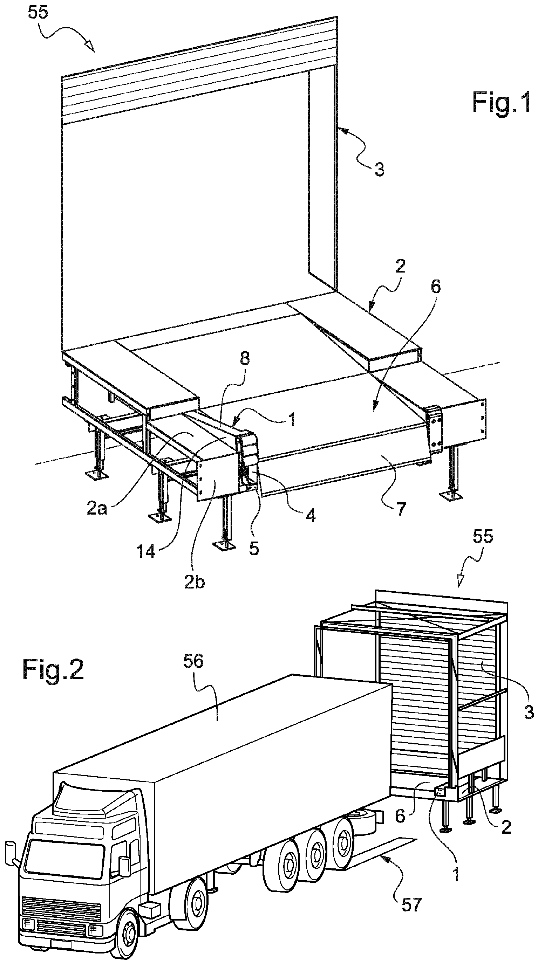

Si l'on se réfère à la Figure 1, on peut voir que l'on a représenté un dispositif de butoir escamotable 1 équipant un quai 2 de chargement/déchargement de véhicule. Le quai 2 est disposé devant une porte de quai 3 de manière à permettre le chargement/déchargement du contenu d'un véhicule par la porte de quai 3.

Le quai 2 comprend un logement 4 destiné à recevoir le dispositif de butoir escamotable 1. Le logement 4 débouche à la fois sur une paroi verticale 2a et une paroi horizontale 2b du quai 2. Le dispositif de butoir escamotable 1 comprend un châssis 5, fixé dans ledit logement 4.

Le quai 2 se présente sous la forme d'une structure en U classique, dont le centre U est occupé par un niveleur 6 à lèvre télescopique 7 servant à établir une passerelle entre l'intérieur de la remorque d'un camion et la porte du quai 3.

Le dispositif de butoir escamotable 1 comprend également un butoir 8. Sur la Figure 1, on a représenté le dispositif de butoir escamotable 1 sur la gauche du niveleur 6, lorsqu'on regarde la Figure 1, et un butoir classique, fixe, sur la droite. Bien entendu, le quai 2 sera équipé de deux dispositifs de butoir escamotable 1 de chaque côté du niveleur 6.

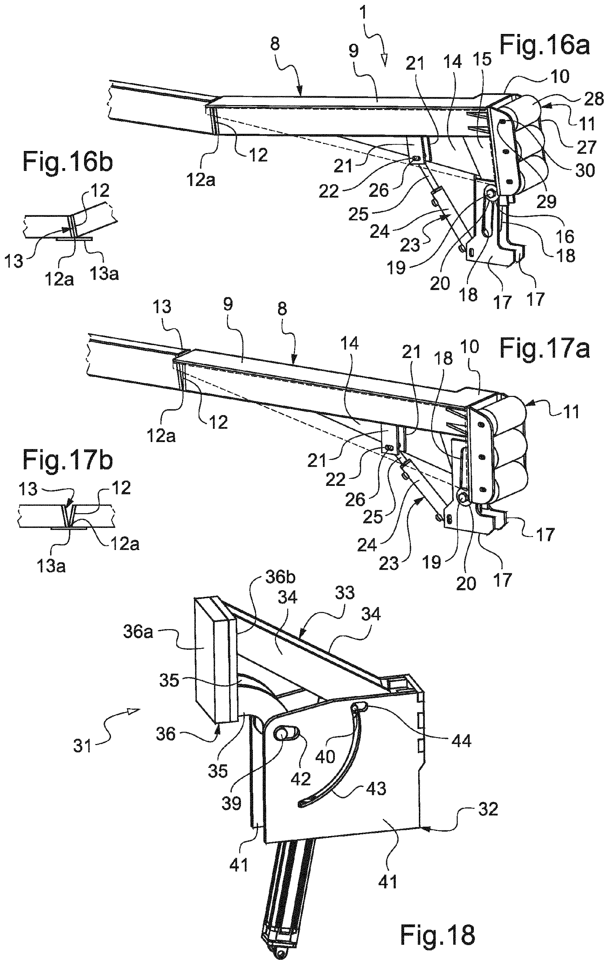

Comme on peut le voir sur les Figures 1, 16a et 17a, le butoir 8 est relié au châssis 5 de manière mobile et est apte à passer d'une position déployée (Figure 16a) à une position escamotée (Figure 17a). Dans sa position escamotée, le butoir 8 est reçu dans le logement 1. Ainsi, lorsque le butoir 8 est escamoté, il est possible d'ouvrir les portes arrière du véhicule car le butoir 8 ne constitue plus un obstacle.

Avant de décrire la structure du dispositif de butoir escamotable 1, on va tout d'abord décrire avec référence aux Figures 2 à 15 le fonctionnement d'une installation 55 de quai de chargement/déchargement de véhicule 56 selon la présente invention, comprenant le quai 2 équipé de deux dispositifs de butoir escamotable 1, ainsi que d'un système d'immobilisation de roue de véhicule 57 comprenant des cales escamotables automatiques telles que décrites dans le brevet français FR 98 06769.

Le déploiement et l'escamotage des dispositifs de butoir escamotables 1 sont asservis à l'état d'ouverture/de fermeture de la porte 3 de telle sorte que la porte 3 s'ouvre et est ouverte, les dispositifs de butoir 1 s'escamotent automatiquement, tandis que lorsque la porte 3 se ferme et est fermée, les dispositifs de butoir 1 se déploient automatiquement.

L'asservissement peut être réalisé de manière simple, avec des moyens bien connus de l'homme du métier. Par exemple, l'appui sur un bouton d'ouverture/fermeture de la porte 3 déclenche, en plus de l'ouverture ou de la fermeture de la porte 3, l'envoi, de manière filaire ou sans fil, d'une instruction au contrôleur intégré dans chacun des vérins des dispositifs de butoir escamotable 1, afin de rétracter ou d'étendre les vérins. Ainsi, par exemple, lesdits moyens de détermination de condition de sécurité peuvent être la carte de circuits imprimés associée au bouton d'ouverture/fermeture de porte, et lesdits moyens de commande sont les contrôleurs intégrés aux vérins. Bien entendu, ce qui précède n'est qu'un exemple de mise en oeuvre de l'asservissement.

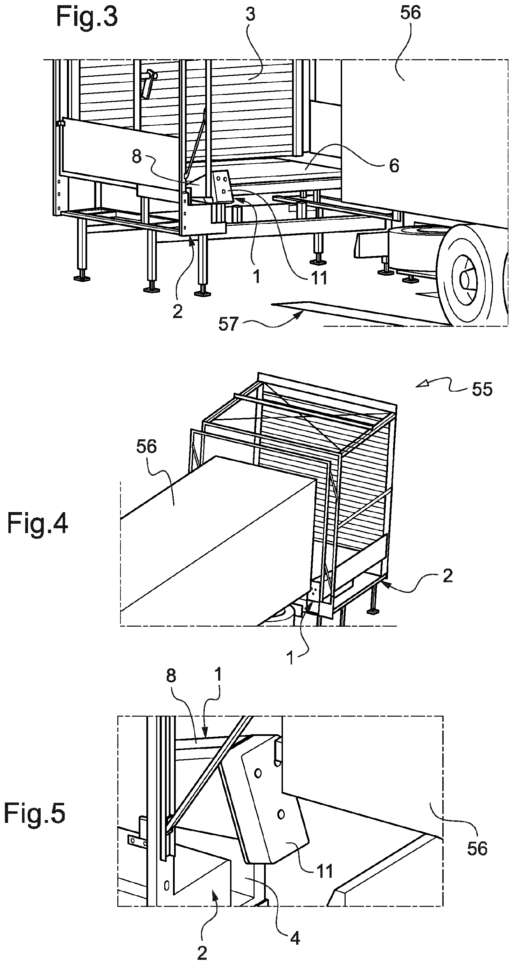

Sur les Figures 2 et 3, on a représenté un véhicule 56 reculant en direction du quai 2 en vue d'une opération de chargement/déchargement. La porte 3 est fermée et les dispositifs de butoir 1 sont donc dans la position déployée, prêt à venir amortir l'accostage du véhicule 56. Les cales du système 57 sont également escamotées automatiquement pour permettre l'arrivée du véhicule 56.

En reculant, le véhicule 56 vient heurter les moyens de butée 11 du butoir 8 (Figures 4 et 5, représentation schématique, le châssis 5 ayant par exemple été omis) et s'immobilise. Comme cela sera explicité ci-après, le choc est transmis au châssis puis au quai 2 et n'est pas repris par le dispositif de butoir 1 et les pièces fragiles qu'il comprend.

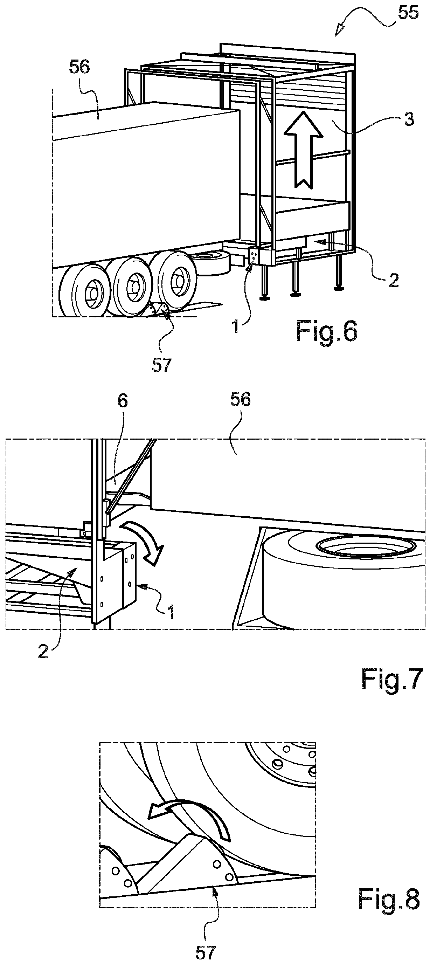

Une fois que le véhicule 56 est stationné, un opérateur à l'intérieur de l'entrepôt ouvre la porte 3 (Figure 6). Cette ouverture conduit à l'escamotage automatique des dispositifs de butoir 1 (Figure 7) et au déploiement automatique des cales du système d'immobilisation 57 (Figure 8).

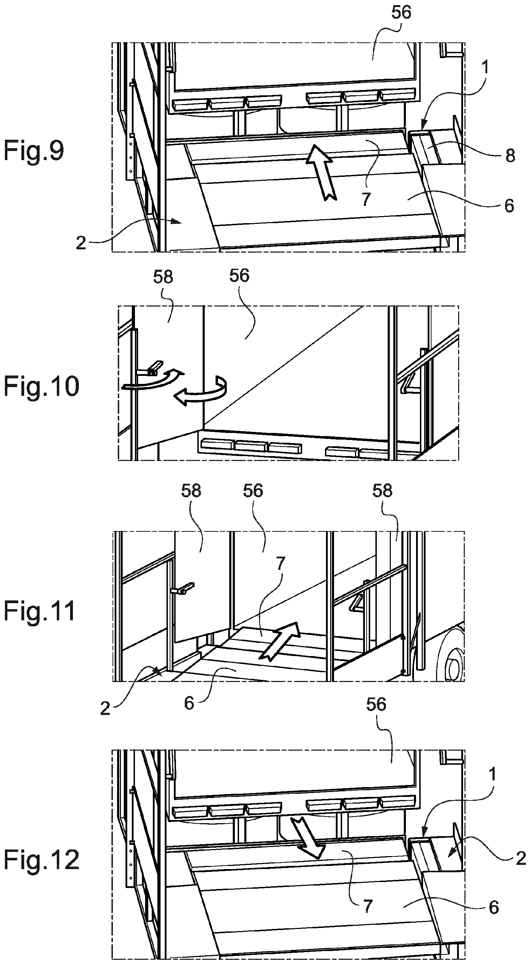

Simultanément, le niveleur 6 est déployé, soit par une commande spécifique de l'opérateur, soit également de manière automatique si le fonctionnement du niveleur 6 est aussi asservi à l'état d'ouverture/de fermeture de la porte 3. La lèvre télescopique 7 est étendue contre l'arrière du véhicule 56, au-dessous des portes arrière 58 (Figure 9), dans la position dite déployée basse.

Il est alors possible à l'opérateur d'ouvrir manuellement les portes arrière 58 du véhicule 56 (Figure 10), sans être gêné par les dispositifs de butoir 1, et de les bloquer en position. La lèvre télescopique 7 est ensuite amenée à l'intérieur du véhicule 56 de manière à constituer une passerelle entre l'intérieur du véhicule 56 et la porte 3 (Figure 11), dans la position dite déployée haute. Il est alors possible de réaliser les opérations de chargement/déchargement.

Une fois les opérations de chargement/déchargement terminées, le véhicule 56 peut repartir et l'opérateur commande la rétractation de la lèvre 7 et l'escamotage du niveleur 6 (Figure 12).

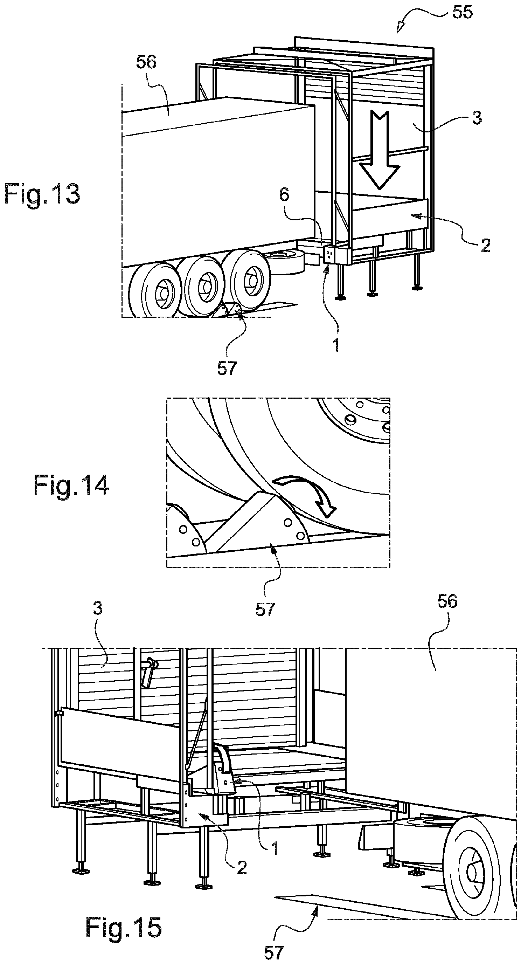

L'opérateur peut alors refermer les portes 58 du véhicule 56 et fermer la porte 3 (Figure 13). Du fait de l'asservissement, la fermeture de la porte 3 conduit à l'escamotage automatique des cales du système 57 (Figure 14) et au déploiement automatique des dispositifs de butoir 1 (Figure 15) en vue de l'accostage du prochain véhicule.

On constate donc que les opérations de chargement/déchargement sont particulièrement simples et sûres dans l'installation de quai selon la présente invention.

Par ailleurs, dans le cas d'une porte à sas, comme représenté sur les Figures, le véhicule peut être ouvert exclusivement depuis l'intérieur de l'entrepôt, ce qui est préférable pour des raisons de sécurité du chargement (garantie du descellement des portes arrière uniquement par l'opérateur depuis l'entrepôt, non-rupture de la chaîne de froid, etc.).

On va maintenant décrire plus en détail la structure du dispositif de butoir escamotable 1 selon un premier mode de réalisation de la présente invention, avec référence aux Figures 16a à 17b.

Sur ces Figures, on peut voir que le butoir 8 est formé par un ensemble poutre 9 dont l'extrémité avant 10, côté véhicule, est équipée de moyens de butée 11 contre lesquels l'arrière d'un véhicule vient en butée, et dont l'extrémité côté quai présente une surface 12, dite d'appui, perpendiculaire à la direction longitudinale de l'ensemble poutre 9. Dans la position escamotée, les moyens de butée 11 font saillie par rapport à la paroi verticale 2a du quai 2, et dans la position déployée, les moyens de butée 11 font saillie par rapport à la paroi verticale 2a du quai 2 et au-dessous de la paroi horizontale 2b.

La surface d'appui 12 vient en appui sur une surface 13, dite d'arrêt, du châssis 5 lorsque le butoir 8 est dans la position déployée (Figure 16a). Comme on peut le voir sur la Figure 17b, la surface d'arrêt 13 est inclinée par rapport à la verticale d'un angle correspondant à l'angle d'inclinaison de la surface d'appui 12 lorsque le butoir 8 est en position déployée, de telle sorte que, dans cette même position, la surface d'arrêt 13a est perpendiculaire à la direction longitudinale de l'ensemble poutre 9. L'effort exercé par un véhicule heurtant les moyens de butée 11 sera ainsi transmis au châssis 5 puis au quai 2. Le châssis 5 présente également une surface de support 13a, horizontale, sur laquelle repose l'extrémité 10 de l'ensemble poutre 9 dans la position escamotée. Dans cette position, l'arête inférieure 12a de la surface d'appui 12 est au contact de l'angle formé entre la surface d'arrêt 13 et la surface de support 13a et formera l'axe de pivotement de l'ensemble poutre 9.

Si l'on se réfère à nouveau à la Figure 1, on peut voir que de chaque côté longitudinal du butoir 8 est positionnée une aile 14. Pour des raisons de visibilité, l'une des ailes 14 n'a pas été représentée sur les Figures 16a à 17b.

Le butoir 8 comporte au niveau de son extrémité avant deux plaques jumelles triangulaires 15 parallèles, positionnées sous la face inférieure de l'ensemble poutre 9 et s'élargissant du bas des moyens d'appui 11 vers l'ensemble poutre 9. Les plaques 15 sont munies au niveau de leur sommet inférieur d'un trou traversant 16 dont le rôle sera explicité ci-après.

Les plaques 15 sont destinées à coopérer avec des plaques de guidage 17 solidaires du châssis 5 et constituées par deux plaques jumelles, d'une forme globalement rectangulaire, parallèles aux plaques 15 et disposées pour que les plaques 15 se situent entre les plaques de guidage 17. Ces dernières sont munies d'un trou oblong 18 s'élevant dans une direction inclinée par rapport à la verticale, depuis l'arrière vers l'avant du châssis 5.

Une goupille 19 traverse les trous 16 des plaques 15 et les trous oblongs 18 des plaques de guidage 17, fait saillie de chaque côté des plaques de guidage 17 où elle est maintenue par un système rondelle/écrou 20.

Ainsi, lors des mouvements de déploiement/escamotage du butoir 8, celui-ci est guidé via la goupille 19, entraînée par les plaques 15, se déplaçant dans les trous oblongs 18.

Comme on peut le voir sur les Figures 16a et 17a, le butoir 8 comprend également, sous la face inférieure de l'ensemble poutre 9, au niveau d'une position intermédiaire entre l'extrémité avant 10 et la surface d'appui 12, deux pattes 21 jumelles parallèles positionnées chacune le long d'un bord longitudinal de l'ensemble poutre 9. Les pattes 21 sont munies d'un trou oblong 22 orienté dans une direction parallèle à la direction longitudinale de l'ensemble poutre 9 et dont le rôle sera explicité ci-après.

Le butoir 8 est actionné par un vérin double effet 23 qui comprend de manière classique un corps 24, ici relié à pivotement avec une pièce fixe du châssis 5, et une tige 25 reliée à pivotement à un axe 26 dont les extrémités sont reçues coulissantes dans les trous oblongs 22 des pattes 21. Le vérin 23 est orienté de telle sorte qu'une extension de la tige 25 hors du corps 24 provoque le pivotement du butoir 8 selon un axe parallèle à l'axe de pivotement du corps 24 et de la tige 25 du vérin 23 par rapport, respectivement, au châssis 5 et à l'axe 26.

Sur les Figures 16a et 17a, on peut voir que les moyens du butée 11 sont formés par une plaque en U 27, ouverte vers l'extérieur et dont les ailes sont orientées dans la direction longitudinale de l'ensemble poutre 9, et par plusieurs rouleaux 28 montés chacun librement rotatif sur un axe 30 perpendiculaire auxdites ailes et dont les extrémités sont fixées dans des trous 29 prévus à cet effet dans lesdites ailes. Les trous 29 sont oblongs et orientés dans la direction longitudinale de l'ensemble poutre 9 de sorte que sous l'effet de la pression exercée par un véhicule, les rouleaux 28 sont autorisés se déplacer en direction du quai. Le montage rotatif des rouleaux 28 facilite le dégagement du butoir 8 lorsqu'il est escamoté après que le véhicule ait été immobilisé.

Si l'on se réfère maintenant aux Figures 18 à 22, on peut voir que l'on y a représenté un dispositif de butoir escamotable 31 selon un second mode de réalisation de la présente invention. Le butoir escamotable 31 comprend un châssis 32 et un butoir 33 relié de manière mobile au châssis 32 de façon à pouvoir passer d'une position déployée à une position escamotée.

Le butoir 33 est formé par un tampon de butée 36, se présentant sous la forme d'une pièce parallélépipédique dont une première face 36a constitue une face de butée et à partir d'une seconde face 36b de laquelle s'étendent par une paires de bras d'appui 34 et une paire de bras coudés 35. Les bras d'appui 34 et coudés 35 consistent chacun en une poutre mince s'étendant vers l'arrière du châssis 32.

Les bras coudés 35 et les bras d'appui 34 comportent en regard au niveau de leur extrémité libre un trou respectivement 37 et 38, que traversent, respectivement, un premier axe de guidage 39 et un second axe de guidage 40.

Le châssis 32 comprend deux plaques de guidage 41, en regard et disposées de part et d'autre du butoir 33. Chaque plaque de guidage 41 est munie d'un trou oblong 42 et d'une rainure arquée 43. Le trou oblong 42 est incliné du haut vers le bas du châssis 32, en partant de l'avant vers l'arrière du châssis 32. Le premier axe de guidage 39 s'étend à travers les trous oblongs 42. Les rainures arquées 43 suivent un arc de cercle centré sur l'extrémité des trous oblongs 42 côté avant du châssis 32 et sont traversées par le second axe de guidage 40. Les rainures arquée 43 se terminent au niveau de leur partie supérieure par une partie de rainure rectiligne horizontale 44.

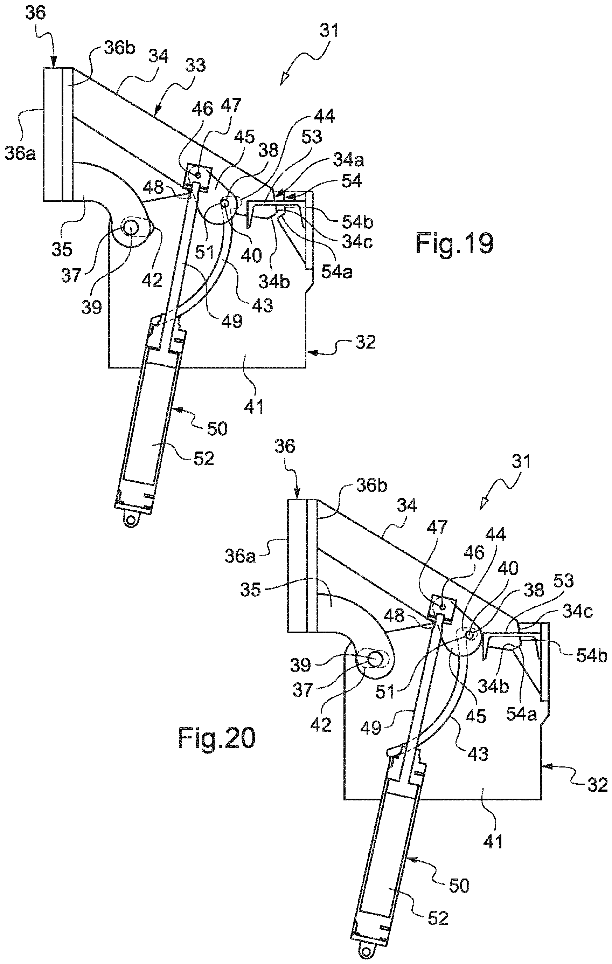

Si l'on se réfère maintenant aux Figures 19 à 22, on peut voir qu'une biellette 45 est disposée parallèle à chaque bras d'appui 34, côté intérieur de celle-ci. Chaque biellette 45 se présente sous la forme d'une goutte aux extrémités arrondies et comprend un trou 46 ménagé au niveau du plus petit côté. Les trous 46 reçoivent chacun l'extrémité respective d'un axe de pivotement 47, relié également à pivotement à l'extrémité 48 de la tige 49 d'un vérin 50, située entre les deux biellettes 45. Chaque biellette 45 comprend également au niveau de son autre extrémité, de façon décentrée, un trou 51 que traverse le second axe de guidage 40.

De façon analogue au premier mode de réalisation, le vérin 50 est relié à pivotement par son corps 52 au châssis 32.

La partie arrière du châssis 32 est munie d'une butée 53 destinée à coopérer avec les biellettes 45, la largeur de la butée 53 étant sensiblement égale à la distance séparant les deux faces extérieures des biellettes 45, de telle sorte que la butée 53 est contenue entre les deux bras d'appui 34.

On va maintenant décrire ci-après le fonctionnement du dispositif de butoir escamotable 31. En position déployée (Figure 19), le butoir 33 est maintenu en position haute par la pression exercée par la tige 49 déployée du vérin 50. Le premier axe de guidage 39 est positionné au niveau de l'extrémité avant des trous oblongs 42 et le second axe de guidage 40 est positionné au niveau de l'extrémité haute de la partie arquée des rainures 43, c'est-à-dire au niveau de l'extrémité avant de la partie horizontale 44. Dans cette configuration, l'extrémité libre des bras d'appui 34, qui consiste en une surface d'appui 34a, se trouve à une petite distance d'une surface d'arrêt 54 portée par le châssis 32, ladite petite distance correspondant à la distance séparant les deux extrémités intérieures des trous oblongs 42.

On a représenté sur la Figure 20 le cas de figure où un véhicule vient en appui contre le tampon de butée 36, et l'on peut voir que le premier axe de guidage 39 a coulissé dans les trous oblongs 42 en direction de l'arrière du châssis 32, ce qui amène la surface d'appui 34a des bras d'appui 34 en contact avec la surface d'arrêt 54 et la biellette 45 en contact avec la butée 53 du châssis 32. L'effort exercé par le véhicule peut ainsi être transmis au châssis 32, puis au quai 2, sans être repris par le vérin 50 ou les articulations mises en jeu dans la liaison entre le butoir 33 et le châssis 32.

On souligne ici que la surface d'arrêt 54 est formée par une première partie de surface 54a inclinée à environ 45° et tournée vers le haut et l'avant du châssis 32, et par une seconde partie de surface d'arrêt 54b, légèrement inclinée par rapport à la verticale et tournée vers l'avant du châssis 32. La surface d'appui 34a présente une forme complémentaire et ainsi une première partie de surface 34b et une seconde partie de surface 34c destinées à venir en appui contre les première et seconde parties de surface d'arrêt 54a et 54b, respectivement.

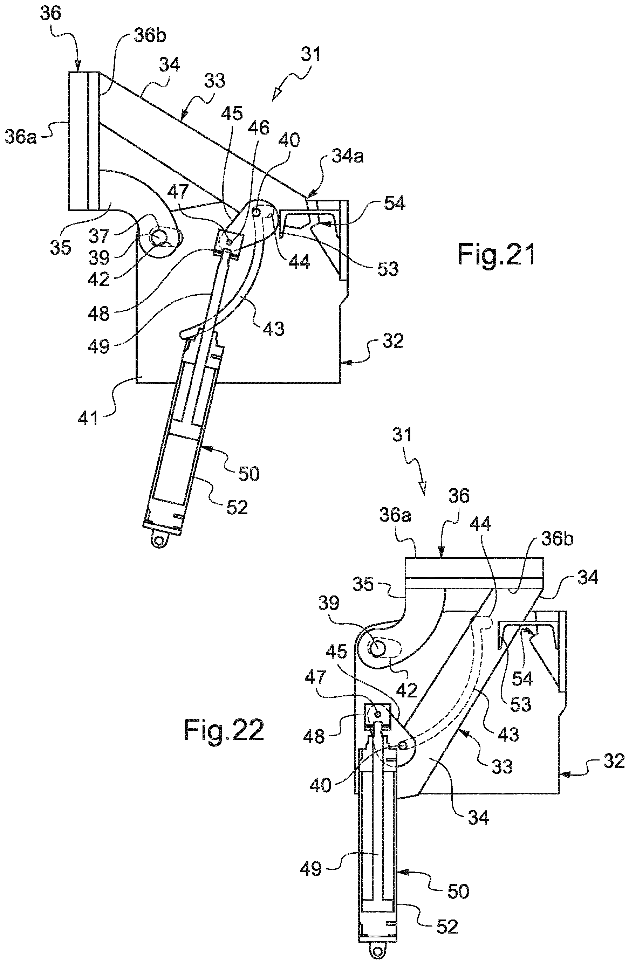

La rétractation de la tige 49 du vérin 50 conduit dans un premier temps à la rotation des biellettes 45 autour du second axe de guidage 40. L'extrémité arrondie des biellettes 45 conduit au roulement de celles-ci sur la butée 53, le caractère excentré des trous 51 traversé par le second axe de guidage 40 conduisant au coulissement de celui-ci dans la partie horizontale 44 des rainures 43, vers l'avant du châssis 32 (Figure 21).

La rétractation de la tige 49 amène ensuite le second axe de guidage 40 à coulisser dans les rainures arquées 43, entraînant alors le butoir 33 à pivoter autour du premier axe de guidage 39. En position escamotée, comme représenté sur la Figure 22, on peut voir que le butoir 33 a pivoté d'environ 90° de manière à amener le tampon de butée 36 à l'horizontale et près de la paroi supérieure du quai 2, de façon à dégager le passage pour les portes arrière d'un véhicule.

Il est bien entendu que les modes de réalisation ci-dessus de la présente invention ont été donnés à titre indicatif et non limitatif et que des modifications pourront y être apportées sans que l'on s'écarte pour autant du cadre de la présente invention.

## Revendications

1. Dispositif de butoir escamotable (1 ; 31) pour une installation de quai (55) de chargement/déchargement de véhicule (56), ladite installation de quai (55) comprenant un quai (2), un niveleur de quai (6) inclinable et de préférence à lèvre télescopique (7), un système d'immobilisation de véhicule (57) configuré pour, dans une position d'immobilisation, immobiliser le véhicule (56) dans un emplacement de chargement/déchargement et, dans une position de non-utilisation, laisser libre le véhicule (56), et une porte de quai (3) permettant de faire communiquer le quai (2) avec un entrepôt, le dispositif de butoir escamotable (1 ; 31) comprenant :
- un châssis (5 ; 32) apte à être fixé dans le quai (2), sur un côté du niveleur de quai (6) et en regard de l'emplacement de chargement/déchargement devant le quai (2) ;
- un butoir mobile (8 ; 33) présentant des moyens de butée (11 ; 36) et relié au châssis (5 ; 32) de façon à être déplaçable par rapport au châssis (5 ; 32) entre une position escamotée, dans laquelle le butoir (8 ; 33) est reçu dans le châssis (5 ; 32) de telle sorte qu'en utilisation le butoir (8 ; 33) ne dépasse pas au-dessus de la surface supérieure (2b) du quai (2) afin de ne pas gêner l'ouverture des portes (58) d'un véhicule (56) stationné dans l'emplacement de chargement/déchargement, et une position déployée, dans laquelle le butoir (8 ; 33) fait saillie du châssis (5 ; 32) de telle sorte qu'en utilisation les moyens de butée (11 ; 36) du butoir (8 ; 33) font saillie en avant et au-dessus du quai (2) de façon à constituer une butée pour l'arrière d'un véhicule (56) accostant le quai (2) ;
- des moyens de déplacement (23 ; 50) du butoir (8 ; 33) entre les positions escamotée et déployée ; et
- des moyens de commande desdits moyens de déplacement (23 ; 50),
le dispositif de butoir escamotable (1 ; 31) comprenant en outre des moyens de détermination de condition de sécurité configurés pour déterminer si au moins une condition de sécurité, comprenant l'état d'ouverture/de fermeture de la porte de quai (3), est satisfaite, et que les moyens de détermination de condition de sécurité sont couplés auxdits moyens de commande pour que ces derniers, par l'intermédiaire desdits moyens de déplacement (23 ; 50), placent le butoir (8 ; 33) dans la position déployée quand la porte de quai (3) est fermée, le dispositif de butoir escamotable (1 ; 31) permettant ainsi de simplifier l'utilisation de l'installation de quai (55) par les opérateurs tout en améliorant la sécurité de ces derniers, le dispositif de butoir escamotable (1 ; 31) étant **caractérisé par le fait que** les moyens de commande placent le butoir (8 ; 33) dans la position escamotée quand la porte de quai (3) est ouverte, **par le fait que** le dispositif de butoir escamotable (1 ; 31) est pour une installation de quai (55) dont le quai (2) comprend un logement de réception de butoir (4) débouchant à la fois sur une paroi verticale (2a) et sur une paroi horizontale (2b) du quai (2), et **par le fait que** :
- le châssis (5 ; 32) est apte à être fixé dans un logement de réception de butoir (4) respectif ;
- le butoir (8 ; 33) comprend une première extrémité (10) qui présente les moyens de butée (11 ; 36) et une seconde extrémité qui présente une surface (12 ; 34a), dite d'appui, venant en appui sur ou au voisinage immédiat d'une surface (13 ; 54), dite d'arrêt, du châssis (5 ; 32) lorsque le butoir (8 ; 33) est dans la position déployée, la surface d'arrêt (13 ; 54) étant orientée pour s'opposer au déplacement du butoir (8 ; 33) sous l'action d'un véhicule (56) appuyant sur les moyens de butée (11 ; 36) ; et
- les moyens de déplacement (23 ; 50) sont reliés au butoir (8 ; 33) et/ou châssis (5 ; 32) par une liaison autorisant un déplacement relatif, entre les moyens de déplacement (23 ; 50) et le butoir (8 ; 33) et/ou le châssis (5 ; 32), dans la direction de déplacement du butoir (8 ; 33) sous l'action d'un véhicule (56) appuyant sur les moyens de butée (11 ; 36),
ce par quoi l'effort exercé par un véhicule (56) heurtant les moyens de butée (11 ; 36) du butoir (8 ; 33) est transmis par le butoir (8 ; 33) au châssis (5 ; 32), puis au quai (2), sans être repris ni par les moyens de déplacement, ni par la liaison entre les moyens de déplacement et le butoir (8 ; 33) et/ou le châssis (5 ; 32), le butoir (8 ; 33) étant relié au châssis (5 ; 32) respectif de façon à être apte à pivoter par rapport à ce dernier, les moyens de déplacement (23 ; 50) étant configurés pour faire pivoter le butoir (8 ; 33) entre les positions escamotée et déployée.

2. Dispositif de butoir escamotable (1 ; 31) selon la revendication 1, **caractérisé par le fait que** lesdits moyens de détermination de condition de sécurité sont configurés pour déterminer à la fois l'état d'ouverture/de fermeture de la porte de quai (3) et la présence/l'absence d'un véhicule stationné (56) dans l'emplacement de chargement/déchargement.

3. Dispositif de butoir escamotable (1 ; 31) selon l'une des revendications 1 et 2, **caractérisé par le fait que** lesdits moyens de détermination sont des moyens de détection configurés pour détecter l'état d'ouverture/de fermeture de la porte (3), et éventuellement la présence/l'absence d'un véhicule (56) dans l'emplacement de chargement/déchargement, lesquels moyens de détection sont choisis dans le groupe constitué par les capteurs à ultrasons, les capteurs optiques et les capteurs à contact.

4. Dispositif de butoir escamotable (1 ; 31) selon l'une des revendications 1 à 3, **caractérisé par le fait que** lesdits moyens de détermination de condition de sécurité sont configurés pour également déterminer si le système d'immobilisation de véhicule (57) est dans la position d'immobilisation ou dans la position de non-utilisation et sont également couplés auxdits moyens de commande pour que ces derniers, par l'intermédiaire desdits moyens de déplacement (23 ; 50), placent le butoir (8 ; 33) dans la position escamotée quand le système d'immobilisation de véhicule (57) est dans la position d'immobilisation et dans la position déployée quand le système d'immobilisation de véhicule (57) est dans la position de non-utilisation.

5. Dispositif de butoir escamotable (1 ; 31) selon l'une des revendications 1 à 4, **caractérisé par le fait que** la surface d'arrêt (13 ; 54) est inclinée selon un angle compris entre 0° et 45° par rapport à la verticale.

6. Dispositif de butoir escamotable (1 ; 31) selon l'une des revendications 1 à 5, **caractérisé par le fait que** les moyens de déplacement (23 ; 50) comprennent un vérin double effet (23 ; 50) dont le corps de vérin (24 ; 52) est reliée de façon pivotante à l'un parmi le châssis (5 ; 32) et le butoir (8 ; 33) et dont la tige de vérin (25 ; 49) est reliée de façon pivotante à l'autre du châssis (5 ; 32) et du butoir (8 ; 33), de telle sorte qu'une extension et une rétraction de la tige de vérin (25 ; 49) déplace le butoir (8 ; 33) respectivement de la position escamotée à la position déployée et inversement.

7. Dispositif de butoir escamotable (1) selon l'une des revendications 1 à 6, **caractérisé par le fait que** le butoir (8) est formé par un ensemble poutre (9) dont une extrémité (10) présente les moyens de butée (11) et dont l'autre extrémité présente la surface d'appui (12), la surface d'arrêt (13) du châssis (5) étant perpendiculaire à la direction longitudinale de l'ensemble poutre (9) de façon à constituer un arrêt en translation pour l'ensemble poutre (9).

8. Dispositif de butoir escamotable (1) selon la revendication 7, **caractérisé par le fait que** le châssis (5) comprend une surface de support horizontale (13a) sur laquelle repose la région d'extrémité (10) de l'ensemble poutre (9) présentant la surface d'appui (12), la surface d'arrêt (13) s'étendant vers le haut à partir de la surface de support (13a) et étant inclinée en étant tournée vers le haut, l'arête horizontale inférieure (12a) de l'ensemble poutre (12) qui repose sur la surface de support (13a) étant en contact avec ladite surface d'arrêt (13), de telle sorte que ladite arête inférieure (12a) forme l'axe de pivotement de l'ensemble poutre (9).

9. Dispositif de butoir escamotable (1) selon l'une des revendications 7 et 8, **caractérisé par le fait qu'**il comprend des moyens de guidage du pivotement de l'ensemble poutre (9), de préférence formés par au moins un trou oblong (18) ménagé dans une plaque de guidage (17) solidaire du châssis (5) et par un axe de guidage (19) relié à rotation à l'ensemble poutre (9) et s'étendant dans ledit ou lesdits trous oblongs (18) de façon à être apte à y coulisser.

10. Dispositif de butoir escamotable (31) selon l'une des revendications 1 à 6, **caractérisé par le fait que** :
- le butoir (33) est formé par une pièce inscrite dans un parallélépipède rectangle (36) et présentant une première face (36a) formant lesdits moyens de butée (36) et une seconde face (36b), opposée à la première face (36a), à partir de laquelle s'étend une paire de bras d'appui (34) généralement rectilignes en regard l'un de l'autre et une paire de bras (35) coudés vers le bas, également en regard l'un de l'autre, l'extrémité libre de chaque bras d'appui (34) présentant la surface d'appui (34a) ;
- le châssis (32) est défini latéralement par deux plaques de guidage (41) dans chacune desquelles sont ménagés un trou oblong (42) généralement horizontal et une rainure (43) suivant un arc de cercle centré sur l'extrémité côté avant dudit trou oblong (42), puis s'achevant en une partie rectiligne (44) généralement horizontale, le trou oblong (42) étant prévu dans la région du coin supérieur avant de la plaque de guidage (41) ;
- un premier axe de guidage (39) s'étend entre les deux bras coudés (35) et également à travers les trous oblongs (42) des plaques de guidage (41) ;
- un second axe de guidage (40) s'étend entre les deux bras d'appui (34), dans la région d'extrémité libre de ceux-ci, et dans les rainures (43, 44) des plaques de guidage (41) ; et
- les moyens (50) de déplacement du butoir (33) sont configurés pour déplacer le butoir (33) en faisant coulisser le second axe de guidage (40) le long des rainures arquées (43), le premier axe de guidage (39) définissant l'axe de pivotement du butoir (33).

11. Dispositif de butoir escamotable (31) selon la revendication 10, prise en dépendance de la revendication 6, **caractérisé par le fait qu'**est prévue au moins une biellette (45) dont une extrémité est reliée au second axe de guidage (40) de façon à être apte à pivoter autour de ce dernier et dont l'autre extrémité est relié à l'un du corps (52) et de la tige (49) du vérin (50) de façon à être apte à pivoter par rapport à ce dernier autour d'un axe de pivotement parallèle au second axe de guidage (40), le vérin (50) étant positionné pour que sa tige (49) soit globalement verticale lorsque le butoir (33) est dans la position escamotée et soit inclinée vers l'arrière du châssis (32) lorsque le butoir (33) est dans la position déployée.

12. Dispositif de butoir escamotable (1 ; 31) selon l'une des revendications 1 à 11, **caractérisé par le fait que** les moyens de butée (11 ; 36) du butoir (8 ; 33) forment un plan théorique de butée contre lequel vient en contact l'arrière d'un véhicule (56) accostant le quai (2), ledit plan théorique de butée étant, dans la position déployée, incliné en étant tourné vers le haut.

13. Installation de quai (55) de chargement/déchargement de véhicule (56), comprenant un quai (2), un niveleur de quai (6) inclinable et, de préférence, à lèvre télescopique (7), deux dispositifs de butoir escamotable (1 ; 31) installés de part et d'autre du niveleur de quai (6), un système d'immobilisation de véhicule (57) configuré pour, dans une position d'immobilisation, immobiliser le véhicule (56) dans un emplacement de chargement/déchargement et, dans une position de non-utilisation, laisser libre le véhicule (56), et une porte de quai (3) permettant de faire communiquer le quai (2) avec un entrepôt, l'installation de quai (55) étant **caractérisée par le fait que** les dispositifs de butoir escamotable (1 ; 31) sont tels que définis à l'une des revendications 1 à 12.

14. Installation de quai (55) selon la revendication 13, **caractérisée par le fait que** le niveleur de quai (6) inclinable et, de préférence, à lèvre télescopique, est muni de moyens de commande couplés auxdits moyens de détermination de condition de sécurité pour que lesdits moyens de commande déploient et escamotent automatiquement le niveleur de quai (6) après que les butoirs (8 ; 33) sont, respectivement, escamotés et déployés.

15. Installation de quai (55) selon l'une des revendications 13 et 14, **caractérisé par le fait que** le système d'immobilisation de véhicule (57) est muni de moyens de commande couplés auxdits moyens de détermination de condition de sécurité pour que lesdits moyens de commande placent le système d'immobilisation de véhicule (57) dans la position d'immobilisation lorsque les butoirs (8 ; 33) sont escamotés et placent automatiquement le système d'immobilisation de véhicule (57) dans la position de non-utilisation lorsque les butoirs (8 ; 33) sont déployés.

16. Procédé d'utilisation de l'installation de quai (55) telle que définie à l'une des revendications 13 à 15, pour une opération de chargement/déchargement, **caractérisé par le fait qu'**il comprend les étapes suivantes :
- en l'absence d'un véhicule (56) stationné dans l'emplacement de chargement/déchargement et avec la porte (3) fermée, automatiquement placer les butoirs (8 ; 33) dans la position déployée, le système d'immobilisation de véhicule (57) dans la position de non-utilisation et le niveleur de quai (6) dans la position escamotée ;
- lors de l'ouverture de la porte (3) et/ou lors de la détermination qu'un véhicule (56) est stationné dans l'emplacement de chargement/déchargement, automatiquement placer les butoirs (8 ; 33) dans la position escamotée, le système d'immobilisation de véhicule (57) dans la position d'immobilisation et le niveleur de quai (6) dans une position dite déployée basse dans laquelle le niveleur de quai (6) vient affleurer contre l'arrière du véhicule (56), dans le but d'en ouvrir les portes arrière (58) ;
- après ouverture des portes arrière (58) du véhicule (56), placer le niveleur de quai (6) dans une position dite déployée haute, dans laquelle le niveleur de quai, notamment sa lèvre, s'étend dans le véhicule (56) pour en effectuer le chargement/déchargement ;
- après que le chargement/déchargement est effectué, placer le niveleur de quai (6) dans la position déployée basse, pour fermeture des portes arrière (56) du véhicule (56) par l'opérateur ; et
- après fermeture des portes arrière (56), fermer la porte (3) et ainsi automatiquement placer les butoirs (8 ; 33) dans la position déployée, le système d'immobilisation de véhicule (57) dans la position de non-utilisation et le niveleur de quai (6) dans la position escamotée.

## Patentansprüche

1. Versenkbare Anschlagvorrichtung (1; 31) für eine Rampenanlage (55) zum Beladen/Entladen eines Fahrzeugs (56), wobei die Rampenanlage (55) eine Rampe (2), eine neigbare und vorzugsweise mit teleskopischer Lippe (7) versehene Rampen-Ladebrücke (6), ein Fahrzeugblockiersystem (57), das konfiguriert ist, um in einer Blockierposition das Fahrzeug (56) in einer Belade-/Entladestelle zu blockieren und in einer Nichtbenutzungsposition das Fahrzeug (56) freizugeben, und eine Rampentür (3), die erlaubt, dass die Rampe (2) mit einem Lager kommuniziert, umfasst, wobei die versenkbare Anschlagvorrichtung (1; 31) umfasst:
- ein Gestell (5; 32), das imstande ist, in der Rampe (2) auf einer Seite der Rampen-Ladebrücke (6) und gegenüber der Belade-/Entladestelle vor der Rampe (2) befestigt zu sein;
- einen beweglichen Anschlag (8; 33), der Anschlagmittel (11; 36) aufweist und mit dem Gestell (5; 32) derart verbunden ist, dass er in Bezug auf das Gestell (5; 32) zwischen einer versenkten Position, in welcher der Anschlag (8; 33) in dem Gestell (5; 32) derart aufgenommen ist, dass der Anschlag (8; 33) in Benutzung nicht über die Oberfläche (2b) der Rampe (2) hinausragt, um nicht das Öffnen der Türen (58) eines Fahrzeugs (56) zu behindern, das in der Belade-/Entladestelle geparkt ist, und einer ausgefahrenen Position, in welcher der Anschlag (8; 33) aus dem Gestell (5; 32) derart herausragt, dass in Benutzung die Anschlagmittel (11; 36) des Anschlags (8; 33) nach vorn und über die Rampe (2) derart hinausragen, dass ein Anschlag für das Heck eines Fahrzeugs (56) gebildet wird, das an der Rampe (2) andockt, verlagerbar ist;
- Verlagerungsmittel (23; 50) des Anschlags (8; 33) zwischen der versenkten und ausgefahrenen Position; und
- Steuermittel der Verlagerungsmittel (23; 50),
wobei die versenkbare Anschlagvorrichtung (1; 31) ferner Bestimmungsmittel von Sicherheitsbedingungen umfasst, die konfiguriert sind, um zu bestimmen, ob mindestens eine Sicherheitsbedingung, umfassend den geöffneten/geschlossenen Zustand der Rampentür (3), eingehalten ist, und dass die Bestimmungsmittel von Sicherheitsbedingungen an die Steuermittel gekoppelt sind, damit diese, über die Verlagerungsmittel (23; 50), den Anschlag (8; 33) in die ausgefahrene Position platzieren, wenn die Rampentür (3) geschlossen ist, wobei die versenkbare Anschlagvorrichtung (1; 31) dadurch erlaubt, die Verwendung der Rampenanlage (55) durch die Bediener bei Verbesserung der Sicherheit derselben zu vereinfachen, wobei die Anschlagvorrichtung (1; 31) **dadurch gekennzeichnet ist, dass** die Steuermittel den Anschlag (8; 33) in die versenkte Position platzieren, wenn die Rampentür (3) geöffnet ist, dadurch, dass die versenkbare Anschlagvorrichtung (1; 31) für eine Rampenanlage (55) ist, deren Rampe (2) eine Anschlagempfangsaufnahme (4) umfasst, die sowohl über eine vertikale Wand (2a) als auch über eine horizontale Wand (2b) der Rampe (2) hinausragt, und dadurch, dass:
- das Gestell (5; 32) imstande ist, in einer jeweiligen Anschlagempfangsaufnahme (4) befestigt zu sein;
- der Anschlag (8; 33) ein erstes Ende (10) umfasst, das die Anschlagmittel (11; 36) aufweist, und ein zweites Ende, das eine Stützfläche (12; 34a) aufweist, die in Abstützung auf oder in unmittelbarer Nachbarschaft einer Stoppfläche (13; 54) des Gestells (5; 32) gelangt, wenn der Anschlag (8; 33) in der ausgefahrenen Position ist, wobei die Stoppfläche (13; 54) ausgerichtet ist, um der Verlagerung des Anschlags (8; 33) unter der Wirkung eines Fahrzeugs (56) entgegenzuwirken, das auf die Anschlagmittel (11; 36) drückt; und
- die Verlagerungsmittel (23; 50) mit dem Anschlag (8; 33) und/oder Gestell (5; 32) durch eine Verbindung verbunden sind, die eine relative Verlagerung zwischen den Verlagerungsmitteln (23; 50) und dem Anschlag (8; 33) und/oder dem Gestell (5; 32) in der Verlagerungsrichtung des Anschlags (8; 33) unter der Wirkung eines Fahrzeugs (56), das auf die Anschlagmittel (11; 36) drückt, gestattet,
so dass die Kraft, die von einem Fahrzeug (56) ausgeübt wird, das an die Anschlagmittel (11; 36) des Anschlags (8; 33) anstößt, von dem Anschlag (8; 33) an das Gestell (5; 32) übertragen wird, dann an die Rampe (2), ohne weder von den Verlagerungsmitteln, noch von der Verbindung zwischen den Verlagerungsmitteln und dem Anschlag (8; 33) und/oder dem Gestell (5; 32) übernommen zu werden, wobei der Anschlag (8; 33) mit dem jeweiligen Gestell (5; 32) derart verbunden ist, dass er imstande ist, in Bezug auf dieses zu schwenken, wobei die Verlagerungsmittel (23; 50) konfiguriert sind, damit der Anschlag (8; 33) zwischen der versenkten und ausgefahrenen Position schwenkt.

2. Versenkbare Anschlagvorrichtung (1; 31) nach Anspruch 1, **dadurch gekennzeichnet, dass** die Bestimmungsmittel von Sicherheitsbedingungen konfiguriert sind, um sowohl den geöffneten/geschlossenen Zustand der Rampentür (3) und die Anwesenheit/Abwesenheit eines in der Belade-/Entladestelle geparkten Fahrzeugs (56) zu bestimmen.

3. Versenkbare Anschlagvorrichtung (1; 31) nach einem der Ansprüche 1 und 2, **dadurch gekennzeichnet, dass** die Bestimmungsmittel Detektionsmittel sind, die konfiguriert sind, um den geöffneten/geschlossenen Zustand der Tür (3) und eventuell die Anwesenheit/Abwesenheit eines Fahrzeugs (56) in der Belade-/Entladestelle zu ermitteln, wobei die Detektionsmittel aus der Gruppe ausgewählt sind, die von den Ultraschallsensoren, den optischen Sensoren und den Kontaktsensoren gebildet ist.

4. Versenkbare Anschlagvorrichtung (1; 31) nach einem der Ansprüche 1 bis 3, **dadurch gekennzeichnet, dass** die Bestimmungsmittel von Sicherheitsbedingungen konfiguriert sind, um ebenfalls zu bestimmen, ob das Fahrzeugblockiersystem (57) in der Blockierposition oder in der Nichtbenutzungsposition ist und ebenfalls an die Steuermittel gekoppelt sind, damit diese, über die Verlagerungsmittel (23; 50), den Anschlag (8; 33) in die versenkte Position platzieren, wenn das Fahrzeugblockiersystem (57) in der Blockierposition ist, und in die ausgefahrene Position, wenn das Fahrzeugblockiersystem (57) in der Nichtbenutzungsposition ist.

5. Versenkbare Anschlagvorrichtung (1; 31) nach einem der Ansprüche 1 bis 4, **dadurch gekennzeichnet, dass** die Stoppfläche (13; 54) gemäß einem Winkel geneigt ist, der zwischen 0° und 45° in Bezug auf die Vertikale beträgt.

6. Versenkbare Anschlagvorrichtung (1; 31) nach einem der Ansprüche 1 bis 5, **dadurch gekennzeichnet, dass** die Verlagerungsmittel (23; 50) einen Doppeleffektzylinder (23; 50) umfassen, dessen Zylinderkörper (24; 52) schwenkend mit einem von dem Gestell (5; 32) und dem Anschlag (8; 33) verbunden ist und dessen Zylinderstange (25; 49) schwenkend mit dem anderen von dem Gestell (5; 32) und dem Anschlag (8; 33) derart verbunden ist, dass ein Ausfahren und ein Einziehen der Zylinderstange (25; 49) den Anschlag (8; 33) jeweils aus der versenkten Position in die ausgefahrene Position und umgekehrt verlagert.

7. Versenkbare Anschlagvorrichtung (1) nach einem der Ansprüche 1 bis 6, **dadurch gekennzeichnet, dass** der Anschlag (8) von einer Balkeneinheit (9) gebildet ist, von der ein Ende (10) die Anschlagmittel (11) aufweist und deren anderes Ende die Stützfläche (12) aufweist, wobei die Stoppfläche (13) des Gestells (5) senkrecht zur Längsrichtung der Balkeneinheit (9) ist, so dass ein Verschiebestopp für die Balkeneinheit (9) gebildet wird.

8. Versenkbare Anschlagvorrichtung (1) nach Anspruch 7, **dadurch gekennzeichnet, dass** das Gestell (5) eine horizontale Trägerfläche (13a) umfasst, auf der die Endregion (10) der Balkeneinheit (9) ruht, aufweisend die Stützfläche (12), wobei sich die Stoppfläche (13) ab der Trägerfläche (13a) nach oben erstreckt und geneigt ist, indem sie nach oben zeigt, wobei die untere horizontale Kante (12a) der Balkeneinheit (12), die auf der Trägerfläche (13a) ruht, mit der Stoppfläche (13) derart im Kontakt ist, dass die untere Kante (12a) die Schwenkachse der Balkeneinheit (9) bildet.

9. Versenkbare Anschlagvorrichtung (1) nach einem der Ansprüche 7 und 8, **dadurch gekennzeichnet, dass** sie Führungsmittel des Schwenkens der Balkeneinheit (9) umfasst, vorzugsweise gebildet von mindestens einem Langloch (18), das in einer Führungsplatte (17) ausgebildet ist, die mit dem Gestell (5) fest verbunden ist, und von einer Führungsachse (19), die mit der Balkeneinheit (9) rotierend verbunden ist und sich in dem oder den Langlöchern (18) derart erstreckt, dass sie imstande ist, dort zu gleiten.

10. Versenkbare Anschlagvorrichtung (31) nach einem der Ansprüche 1 bis 6, **dadurch gekennzeichnet, dass**:
- der Anschlag (33) von einem Teil gebildet ist, das in einen rechteckiges Parallelepiped (36) eingeschrieben ist und eine erste Fläche (36a) aufweist, die die Anschlagmittel (36) bildet, und eine zweite Fläche (36b) gegenüber der ersten Fläche (36a), ab der sich ein Paar allgemeiner gerader Stützarme (34) einander gegenüber und ein Paar nach unten gekrümmter Arme (35) ebenfalls einander gegenüber erstreckt, wobei das freie Ende jedes Stützarms (34) die Stützfläche (34a) aufweist;
- das Gestell (32) seitlich von zwei Führungsplatten (41) definiert ist, wobei in jede von ihnen ein allgemein horizontales Langloch (42) und eine Rille (43) gemäß einem Kreisbogen, zentriert auf dem vorderseitigen Ende des Langlochs (42), ausgebildet sind, die dann in einem allgemein horizontalen geraden Teil (44) endet, wobei das Langloch (42) in der Region der vorderen oberen Ecke der Führungsplatte (41) vorgesehen ist;
- sich eine erste Führungsachse (39) zwischen den zwei gekrümmten Armen (35) und ebenfalls durch die Langlöcher (42) der Führungsplatten (41) erstreckt;
- sich eine zweite Führungsachse (40) zwischen den zwei Stützarmen (34) erstreckt, in der freien Endregion derselben, und in den Rillen (43, 44) der Führungsplatten (41); und
- die Verlagerungsmittel (50) des Anschlags (33) konfiguriert sind, um den Anschlag (33) durch Gleiten der zweiten Führungsachse (40) entlang der gebogenen Rillen (43) zu verlagern, wobei die erste Führungsachse (39) die Schwenkachse des Anschlags (33) definiert.

11. Versenkbare Anschlagvorrichtung (31) nach Anspruch 10, herangezogen in Abhängigkeit von Anspruch 6, **dadurch gekennzeichnet, dass** mindestens ein Schwingarm (45) vorgesehen ist, von dem ein Ende mit der zweiten Führungsachse (40) derart verbunden ist, dass er imstande ist, um diese zu schwenken, und dessen anderes Ende mit einem von dem Körper (52) und der Stange (49) des Zylinders (50) derart verbunden ist, dass er imstande ist, in Bezug auf diesen um eine Schwenkachse zu schwenken, die parallel zur zweiten Führungsachse (40) ist, wobei der Zylinder (50) positioniert ist, damit seine Stange (49) allgemein vertikal ist, wenn der Anschlag (33) in der versenkten Position ist, und hinter dem Gestell (32) geneigt ist, wenn der Anschlag (33) in der ausgefahrenen Position ist.

12. Versenkbare Anschlagvorrichtung (1; 31) nach einem der Ansprüche 1 bis 11, **dadurch gekennzeichnet, dass** die Anschlagmittel (11; 36) des Anschlags (8; 33) eine theoretische Anschlagebene bilden, an der das Heck eines Fahrzeugs (56), das an der Rampe (2) andockt, in Kontakt kommt, wobei die theoretische Anschlagebene in der ausgefahrenen Position geneigt ist, indem sie nach oben zeigt.

13. Rampenanlage (55) zum Beladen/Entladen eines Fahrzeugs (56), umfassend eine Rampe (2), eine neigbare Rampen-Ladebrücke (6) und vorzugsweise mit teleskopischer Lippe (7), zwei versenkbare Anschlagvorrichtungen (1; 31), die beiderseits der Rampen-Ladebrücke (6) installiert sind, ein Fahrzeugblockiersystem (57), das konfiguriert ist, um in einer Blockierposition das Fahrzeug (56) in einer Belade-/Entladestelle zu blockieren und in einer Nichtbenutzungsposition das Fahrzeug (56) frei zu lassen, und eine Rampentür (3), die erlaubt, die Rampe (2) mit einem Lager in Kommunikation zu versetzen, wobei die Rampenanlage (55) **dadurch gekennzeichnet ist, dass** die versenkbaren Anschlagvorrichtungen (1; 31) nach einem der Ansprüche 1 bis 12 sind.

14. Rampenanlage (55) nach Anspruch 13, **dadurch gekennzeichnet, dass** die neigbare Rampen-Ladebrücke (6) und vorzugsweise mit teleskopischer Lippe mit Steuermitteln ausgestattet ist, die an die Bestimmungsmittel von Sicherheitsbedingungen gekoppelt sind, damit die Steuermittel die Rampen-Ladebrücke (6) automatisch versenken und ausfahren, nachdem die Anschläge (8; 33) jeweils versenkt und ausgefahren wurden.

15. Rampenanlage (55) nach einem der Ansprüche 13 und 14, **dadurch gekennzeichnet, dass** das Fahrzeugblockiersystem (57) mit Steuermittel ausgestattet ist, die an die Bestimmungsmittel von Sicherheitsbedingungen gekoppelt sind, damit die Steuermittel das Fahrzeugblockiersystem (57) in die Blockierposition platzieren, wenn die Anschläge (8; 33) versenkt sind, und das Fahrzeugblockiersystem (57) automatisch in die Nichtbenutzungsposition platzieren, wenn die Anschläge (8; 33) ausgefahren sind.

16. Verfahren zur Verwendung der Rampenanlage (55) nach einem der Ansprüche 13 bis 15 für einen Belade-/Entlade-Vorgang, **dadurch gekennzeichnet, dass** es die folgenden Schritte umfasst:
- bei Abwesenheit eines in der Belade-/Entladestelle geparkten Fahrzeugs (56) und mit geschlossener Tür (3), automatisches Platzieren der Anschläge (8; 33) in die ausgefahrene Position, des Fahrzeugblockiersystems (57) in die Nichtbenutzungsposition und der Rampen-Ladebrücke (6) in die versenkte Position;
- beim Öffnen der Tür (3) und/oder bei Feststellung, dass ein Fahrzeug (56) in der Belade-/Entladestelle geparkt ist, automatisches Platzieren der Anschläge (8; 33) in die versenkte Position, des Fahrzeugblockiersystems (57) in die Blockierposition und der Rampen-Ladebrücke (6) in eine niedrige ausgefahrene Position, in welcher die Rampen-Ladebrücke (6) an das Heck des Fahrzeugs (56) anlegt mit dem Ziel, dessen hintere Türen (58) zu öffnen;
- nach dem Öffnen der hinteren Türen (58) des Fahrzeugs (56), Platzieren der Rampen-Ladebrücke (6) in eine hohe ausgefahrene Position, in welcher die Rampen-Ladebrücke, insbesondere ihre Lippe, sich in das Fahrzeug (56) erstreckt, um dessen Beladen/Entladen durchzuführen;
- nach Durchführen des Beladens/Entladens, Platzieren der Rampen-Ladebrücke (6) in die niedrige ausgefahrene Position zwecks Schließens der hinteren Türen (56) des Fahrzeugs (56) durch den Bediener, und
- nach dem Schließen der hinteren Türen (56), Schließen der Tür (3) und somit automatisches Platzieren der Anschläge (8; 33) in die ausgefahrene Position, des Fahrzeugblockiersystems (57) in die Nichtbenutzungsposition und der Rampen-Ladebrücke (6) in die versenkte Position.

## Claims

1. A retractable stopper device (1; 31) for a dock facility (55) for loading/unloading a vehicle (56), said dock facility (55) comprising a dock (2), a dock leveler (6) being tiltable and preferably having a telescopic lip (7), a vehicle immobilizing system (57) configured to, in an immobilizing position, immobilize the vehicle (56) at a loading/unloading location and, in a non-use position, release the vehicle (56), and a dock door (3) allowing to communicate the dock (2) with a warehouse, the retractable stopper device (1; 31) comprising:
- a frame (5; 32) able to be attached in the dock (2), on one side of the dock leveler (6) and facing the loading/unloading location in front of the dock (2);
- a movable stopper (8; 33) having stopping means (11; 36) and connected to the frame (5; 32) so as to be movable with respect to the frame (5; 32) between a retracted position, in which the stopper (8; 33) is housed within the frame (5; 32) such that, in use, the stopper (8; 33) does not protrude from the upper surface (2b) of the dock (2) so as not to impede the opening of the doors (58) of a vehicle (56) parked at the loading/unloading location, and a deployed position, in which the stopper (8; 33) protrudes from the frame (5; 32) such that, in use, the stopping means (11; 36) of the stopper (8; 33) protrude forwardly and above the dock (2) so as to constitute a stop for the rear part of a vehicle (56) approaching the dock (2);
- moving means (23; 50) for moving the stopper (8; 33) between the retracted and deployed positions; and
- controlling means for controlling said moving means (23; 50),
the retractable stopper device (1; 31) further comprising safety condition determining means configured to determine if at least one safety condition, including the opening/closing state of the dock door (3), is met, and the safety condition determining means are coupled to said controlling means such that the latter, via said moving means (23; 50), place the stopper (8; 33) in the deployed position when the dock door (3) is closed, the retractable stopper device (1; 31) thus allowing to simplify the use of the dock facility (55) by the operators while improving their safety,
the retractable stopper device (1; 31) being **characterised by** the fact that the controlling means place the stopper (8; 33) in the retracted position when the dock door (3) is open, by the fact that the retractable stopper device (1; 31) is for a dock facility (55) whose dock (2) comprises a stopper receiving housing (4) opening onto a vertical wall (2a) and onto a horizontal wall (2b) of the dock (2), and by the fact that:
- the frame (5; 32) is able to be attached in a respective stopper receiving housing (4);
- the stopper (8; 33) comprises a first end (10) which has the stopping means (11; 36) and a second end which has a so-called bearing surface (12; 34a) coming to bear on or in the immediate vicinity of a so-called stop surface (13; 54) of the frame (5; 32) when the stopper (8; 33) is in the deployed position, the stop surface (13; 54) being oriented to oppose the movement of the stopper (8; 33) under the action of a vehicle (56) pressing on the stopping means (11; 36); and
- the moving means (23; 50) are connected to the stopper (8; 33) and/or frame (5; 32) with a connection allowing a relative movement, between the moving means (23; 50) and the stopper (8; 33) and/or the frame (5; 32), in the movement direction of the stopper (8; 33) under the action of a vehicle (56) pressing on the stopping means (11; 36),
whereby the stress applied by a vehicle (56) hitting the stopping means (11; 36) of the stopper (8; 33) is transmitted by the stopper (8; 33) to the frame (5; 32), and then to the dock (2), without being borne by the moving means or the connection between the moving means and the stopper (8; 33) and/or the frame (5; 32), the stopper (8; 33) being connected to the respective frame (5; 32) so as to be able to pivot with respect to the latter, the moving means (23; 50) being configured to pivot the stopper (8; 33) between the retracted and deployed positions.

2. The retractable stopper device (1; 31) according to claim 1, **characterised by** the fact that said safety condition determining means are configured to determine both the opening/closing state of the dock door (3) and the presence/absence of a vehicle (56) parked at the loading/unloading location.

3. The retractable stopper device (1; 31) according to one of claims 1 and 2, **characterised by** the fact that said determining means are detecting means configured to detect the opening/closing state of the door (3), and optionally the presence/absence of a vehicle (56) at the loading/unloading location, said detecting means being selected among the group consisting in ultrasound sensors, optical sensors and contact sensors.

4. The retractable stopper device (1; 31) according to one of claims 1-3, **characterised by** the fact that said safety condition determining means are configured to determine whether the vehicle immobilizing system (57) is in the immobilizing position or the non-use position and are also coupled to said controlling means such that the latter, via said moving means (23; 50), place the stopper (8; 33) in the retracted position when the vehicle immobilizing system (57) is in the immobilizing position, and in the deployed position when the vehicle immobilizing system (57) is in the non-use position.

5. The retractable stopper device (1; 31) according to one of claims 1-4, **characterised by** the fact that the stop surface (13; 54) is inclined by an angle between 0° and 45° with respect to the vertical.

6. The retractable stopper device (1; 31) according to one of claims 1-5, **characterised by** the fact that the moving means (23; 50) comprise a double acting cylinder (23; 50), the cylinder body (24; 52) of which is pivotally connected to one of the frame (5; 32) and the stopper (8; 33) and the cylinder rod (25; 49) of which is pivotally connected to the other of the frame (5; 32) and the stopper (8; 33), such that an extension and a retraction of the cylinder rod (25; 49) moves the stopper (8; 33) from the retracted position to the deployed position, respectively, and vice-versa.

7. The retractable stopper device (1) according to one of claims 1-6, **characterised by** the fact that the stopper (8) is formed by a beam assembly (9), one end (10) of which has the stopping means (11) and the other end of which has the bearing surface (12), the stop surface (13) of the frame (5) being perpendicular to the longitudinal direction of the beam assembly (9) so as to constitute a translation stop for the beam assembly (9).

8. The retractable stopper device (1) according to claim 7, **characterised by** the fact that the frame (5) comprises a horizontal support surface (13a) on which rests the end region (10) of the beam assembly (9) having the bearing surface (12), the stop surface (13) extending upwards from the support surface (13a) and being inclined with being facing upwards, the lower horizontal edge (12a) of the beam assembly (9) which rests on the support surface (13a) being in contact with said stop surface (13), such that said lower edge (12a) forms the pivot axis of the beam assembly (9).

9. The retractable stopper device (1) according to one of claims 7 and 8, **characterised by** the fact that it comprises means for guiding the pivoting of the beam assembly (9), preferably formed by at least one oblong hole (18) provided in a guiding plate (17) integral with the frame (5) and by a guiding axis (19) rotatably connected to the beam assembly (9) and extending in said oblong hole(s) (18) so as to be able to slide therein.

10. The retractable stopper device (31) according to one of claims 1-6, **characterised by** the fact that:
- the stopper (33) is formed by a part inscribed in a parallelepiped rectangle (36) and having a first face (36a) forming said stopping means (36) and a second face (36b), opposite the first face (36a), from which extend a pair of bearing arms (34) being generally rectilinear and facing each other and a pair of arms (35) bent downwards and also facing each other, the free end of each bearing arm (34) having the bearing surface (34a);
- the frame (32) is laterally defined by two guiding plates (41) in each of which are provided a generally horizontal oblong hole (42) and a groove (43) following an arc of a circle centered on the front-side end of said oblong hole (42), and then ending into a generally horizontal rectilinear portion (44), the oblong hole (42) being provided in the front upper corner region of the guiding plate (41);
- a first guiding pin (39) extends between both bent arms (35) and also through the oblong holes (42) of the guiding plates (41);
- a second guiding pin (40) extends between the two bearing arms (34), in the free end region thereof, and in the grooves (43, 44) of the guiding plates (41); and
- the means (50) for moving the stopper (33) are configured to move the stopper (33) by sliding the second guiding pin (40) along the arcuate grooves (43), the first guiding pin (39) defining the pivot axis of the stopper (33).

11. The retractable stopper device (31) according to claim 10 when dependent on claim 6, **characterised by** the fact that there is at least one connecting link (45), one end of which is connected to the second guiding pin (40) so as to be able to pivot around the latter and the other end of which is connected to one of the body (52) and the rod (49) of the cylinder (50) so as to be able to pivot with respect to the latter around a pivot axis parallel to the second guiding pin (40), the cylinder (50) being positioned such that its rod (49) is globally vertical when the stopper (33) is in the retracted position and is tilted rearwards of the frame (32) when the stopper (33) is in the deployed position.

12. The retractable stopper device (1; 31) according to one of claims 1-11, **characterised by** the fact that the stopping means (11; 36) of the stopper (8; 33) form a stopping theoretical plane against which the rear part of a vehicle (56) approaching the dock (2) contacts, said stopping theoretical plane being, in the deployed position, tilted with facing upwards.

13. A dock facility (55) for loading/unloading a vehicle (56), comprising a dock (2), a dock leveler (6) being tiltable and preferably having a telescopic lip (7), two retractable stopper devices (1; 31) installed on either side of the dock leveler (6), a vehicle immobilizing system (57) configured to, in an immobilizing position, immobilize the vehicle (56) at a loading/unloading location and, in a non-use position, release the vehicle (56), and a dock door (3) allowing to communicate the dock (2) with a warehouse, the dock facility (55) being **characterised in that** the retractable stopper devices (1; 31) are as defined in one of claims 1-12.

14. The dock facility (55) according to claim 13, **characterised in that** the dock leveler (6), being tiltable and preferably having a telescopic lip (7), is provided with controlling means coupled to said safety condition determining means such that said controlling means automatically deploy and retract the dock leveler (6) after the stoppers (8; 33) are retracted and deployed, respectively.

15. The dock facility (55) according to one of claims 13 and 14, **characterised by** the fact that the vehicle immobilizing system (57) is provided with controlling means coupled to said safety condition determining means such that said controlling means place the vehicle immobilizing system (57) in the immobilizing position when the stoppers (8; 33) are retracted and automatically place the vehicle immobilizing system (57) in the non-use position when the stoppers (8; 33) are deployed.

16. A method of use of the dock facility (55) as defined in one of claims 13-15, for a loading/unloading operation, **characterised by** the fact that it comprises the following steps:
- in the absence of a vehicle (56) parked at the loading/unloading location and with the door (3) closed, automatically placing the stoppers (8; 33) in the deployed position, the vehicle immobilizing system (57) in the non-use position and the dock leveler (6) in the retracted position;
- when opening the door (3) and/or determining that a vehicle (56) is parked at the loading/unloading location, automatically placing the stoppers (8; 33) in the retracted position, the vehicle immobilizing system (57) in the immobilizing position and the dock leveler (6) in a so-called low deployed position in which the dock leveler (6) contacts the rear part of the vehicle (56), in order to open the rear doors (58);
- after opening the rear doors (58) of the vehicle (56), placing the dock leveler (6) in a so-called high deployed position in which the dock leveler, namely its lip, extends into the vehicle (56) in order to perform the loading/unloading;
- after the loading/unloading is completed, placing the dock leveler (6) in the low deployed position such that the operator can close the rear doors (58) of the vehicle (56); and
- after closing the rear doors (58), closing the door (3) and, thus, automatically placing the stoppers (8; 33) in the deployed position, the vehicle immobilizing system (57) in the non-use position and the dock leveler (6) in the retracted position.
